# EUROPEAN PATENT SPECIFICATION

(11) **EP 1 675 304 B1**
(45) Date of publication and mention of the grant of the patent: **02.06.2010**
(21) Application number: 05028156.7
(22) Date of filing: 22.12.2005
(51) Int. Cl.: H04L 12/24, H04L 12/46

(54) **System and method for reducing OAM frame leakage out of an Ethernet OAM domain**
System und Verfahren zur Reduktion des OAM-Rahmenlecks außerhalb einer Ethernet-OAM-Domäne
Système et procédé pour réduire la fuite de trames OAM hors d'un domaine OAM Ethernet

(30) Priority: 22.12.2004 US 21642
(43) Date of publication of application: 28.06.2006
(73) Proprietor: Alcatel Lucent, 75008 Paris (FR)
(72) Inventor: Cosaque, David Elie Dit, Richardson, TX 75080 (US); Sridhar, Kamakshi, Plano, Texas 75093 (US); Vissers, Maarten Petrus Joseph, 1277 BE Huizen (NL); Van Kerckhove, Tony, 2060 Antwerp (BE)
(74) Representative: Schmidt, Werner Karl

(56) References cited:
- ELIE-DIT-COSAQUE D ET AL: "Review of 802.1ag framework" ALCATEL, 12 March 2004 (2004-03-12), XP002346927
- INTERWORKING TASK GROUP OF IEEE 802 1: "Virtual Bridged Local Area Networks - Amendment 5: Connectivity Fault Management" IEEE P802.1AG/D1.0, IEEE, NEW YORK, NY, US, 3 December 2004 (2004-12-03), page complete, XP002366100
- ITU-T QUESTION 3, STUDY GROUP 13: "OAM Functions and Mechanisms for Ethernet based networks"[Online] 24 June 2004 (2004-06-24), pages 1-81, XP002395132 Retrieved from the Internet: URL:http://www.ieee802.org/1/files/public/ docs2004/DSL-ethernet-OAM.zip> [retrieved on 2006-08]
- DINESH MOHAN NORTEL NETWORKS ALI SAJASSI CISCO SYSTEMS VPLS OAM REQUIREMENTS AND FRAMEWORK: "VPLS OAM Requirements and Framework; draft-ietf-l2vpn-oam-req-frmk-01.tx" IETF STANDARD-WORKING-DRAFT, INTERNET ENGINEERING TASK FORCE, IETF, CH, vol. l2vpn, no. 1, October 2004 (2004-10), XP015021974 ISSN: 0000-0004
- DINESH M: "802.1AG CONNECTIVITY FAULT MANAGEMENT TUTORIAL" NORTEL NETWORKS, 12 July 2004 (2004-07-12), XP002346928

## Description

### BACKGROUND OF THE INVENTION

### Technical Field of the Invention

The present invention generally relates to Ethernet OAM networks. More particularly, and not by way of any limitation, the present invention is directed to a system and method for reducing OAM frame leakage in an Ethernet OAM domain.

### Description of Related Art

The link between the end user and the public network, essential key to the delivery of broadband applications to residential and business subscribers, is known by many names, e.g., first mile, last mile, local loop, metro access, subscriber access network, etc., and is implemented using a variety of different transport technologies and protocols over diverse physical connections. For instance, today most users connect to the public network with Digital Subscriber Line (DSL), Integrated Services Digital Network (ISDN), cable TV, T1/E1 or T3/E3 lines, using Synchronous Optical Network and its companion Synchronous Digital Hierarchy(SONET/SDH), Frame Relay and Asynchronous Transfer Mode (ATM). Regardless of the nomenclature or the actual implementation, all access networks require operations, administration and maintenance (OAM) support features to ensure the maintainability and uptime required to provide broadband services.

Current first/last mile solutions have significant shortcomings from the customer's perspective, ranging from performance bottlenecks, fixed bandwidth provisioning, limited scalability, lack of flexibility and provisioning complexity to end-to-end quality of service (QoS) issues and a high cost structure. The use of robust, simple Ethernet technology in the first mile promises to revolutionize the access network as it did the enterprise network. Ethernet is a local area network (LAN) transport technology that is used ubiquitously in the home and in business to communicate between computers and networks. As an access technology, Ethernet offers three significant advantages over legacy first mile technologies: (i) future-proof transport for data, video and voice applications; (ii) cost-effective infrastructure for data services; and (iii) simple, globally accepted standard that will ensure interoperability.

In order to adapt the Ethernet technology in a carrier-grade service environment, various standards are being developed that aim to provide advanced OAM capabilities (also referred to as Ethernet Connectivity and Fault Management or Ethernet CFM) across the entire network from one end to the other end. Since the end-to-end service network environment is typically comprised of a patchwork of diverse component networks (e.g., metro access networks and core networks using a variety of technologies) that may belong to different organizations, network operators and service providers, the Ethernet OAM plane is envisioned as a hierarchically layered domain space wherein specific OAM domains are defined corresponding to the constituent network infrastructure and provisioning. In particular, two standards, IEEE 802.1ag and ITU-T (Question 3, Study Group 13), incorporated by reference herein, that are specifically concerned with end-to-end Ethernet OAM define a customer-level domain at the highest level of hierarchy, which comprises one or more provider domains (occupying an intermediate level), each of which in turn includes one or more operator domains disposed at a lower hierarchical level. By way of standardization, the OAM domain space may be partitioned into a number of levels, e.g., 8 levels, each domain corresponding to a particular level, wherein a domain is defined in terms of what are referred to as flow points. In the context of the IEEE 802 specification suite, the flow points are new entities contained in the Media Access Control (MAC) "interfaces" and "ports" as defined in related standards documentation. A port can implement multiple flow points, of different types. A flow point at the edge of an OAM domain is called a "Maintenance End Point" or MEP. A flow point inside a domain and visible to an MEP is called a "Maintenance Intermediate Point" or MIP. Whereas MEP nodes are used by system administrators to initiate and monitor OAM activity (by issuing appropriate OAM frames), MIP nodes passively receive and respond to OAM flows initiated by MEP nodes.

An OAM domain having one or more MIP nodes is bounded by a pair of MEP nodes. In order that OAM frame flows are appropriately filtered so that they are processed only by the intended domain's nodes, the MEP/MIP population of an Ethernet OAM network needs to be properly configured. In accordance with the current standards, absolute OAM level encoding uses an integer value to indicate a specific domain level.

Moreover, standards are also being specified to enhance service delivery technologies, which allow provisioning of Virtual LANs (VLANs) on top of a Layer-2 (L2) Ethernet network for adding flexibility, scalability and security to the OAM network. VLANs may be defined on different levels, e.g., customer-level or provider-level, and can include any number of non-intersecting OAM domains. Service frame fields preceded with a "C-", e.g., C-VLAN ID, refers to customer-created fields. Likewise, service frame fields preceded with a "P-" (e.g., P-VLAN ID), refer to provider-added fields. By implementing VLANs, an end-to-end Ethernet OAM network may be partitioned into a number of service instances while preserving multiple subscribers' C-VLANs, wherein the traffic in a given VLAN is invisible to end hosts belonging to a different VLAN, thus reducing the broadcast domain.

In Elie-Dit-Cosaque, Vissers, "Review of 802.1ag framework" principle concepts and problems in the 802.1ag framework are described and problems related to introducing a level field in an OAM frame are discussed. The information in the level field is used to determine, whether a received OAM frame shall be forwarded or processed by a receiving MIP. Furthermore, "accidental leaks" are mentioned, which means that OAM frames are forwarded between different VLANs due to corrupt bridge filtering databases.

A draft version of the aforementioned standard (IEEE 802.1ag) is known as "IEEE P802.1ag/D1.0; draft standard for local and metropolitan area networks; virtual bridged local area networks-amendment 5: connectivity fault management" in particular addresses connectivity fault management. This draft standard gives background information, e.g. definitions of MEP, MIP and domains, and describes the link trace functionality, wherein a MIP sends a OAM to the next MIP along a predefined trace path.

A draft recommendation of the aforementioned ITU-T recommendation is called "Y.17ethoam; OAM Functions and Mechanisms for Ethernet-based Networks". This draft recommendation describes the architecture of Ethernet-based networks and OAM functions that should be realized. Furthermore, the draft recommendation describes level information as being necessary in order to identify whether a OAM frame belongs to a specific OAM domain and that level information is used to prevent leaking of OAM frames beyond OAM domains, in that each MEP reads the level information and determines, whether the received OAM frame belongs to the same or another domain.

In order to detect fault location in an Ethernet OAM network, pinging functionality has been proposed wherein unicast Ping frames are issued by a MEP to the MIP nodes within its OAM domain. In this context, implementation of a VLAN gives rise to a potential OAM frame leakage issue, however, especially where multiple OAM domains are provisioned within the VLAN or if the VLAN domain is larger than the OAM domain. For instance, if the MEP at a particular OAM level pings a MIP entity, and an intermediate MIP entity does not have a port address entry for the Ping destination address (DA) in its filtering database, then the intermediate MIP entity will broadcast the Ping message to all nodes within the

VLAN in which the MEP is disposed. Since broadcast causes the Ping frames to be sent out on all VLAN ports, what was intended to be a domain-specific unicast message becomes a broadcast message in the entire VLAN, thereby causing potential security violations by breaching OAM domain separation.

### SUMMARY OF THE INVENTION

In one aspect, the present invention is directed to a scheme for reducing frame leakage in a VLAN defined in an Ethernet OAM network. Upon receiving a unicast OAM frame having a destination address (DA) and a source address (SA) at a MIP bridge entity disposed in a particular OAM domain, a logic structure is operable for querying a first database (e.g., a forwarding database) associated with the MIP bridge entity to determine if the DA is provided in the first database with an outgoing port address. If otherwise, further logic is provided for querying a second database (e.g., a Continuity Check database) to verify if the SA corresponds to a MEP node that is provided in the second database. If so, corresponding OAM domain level information of the MEP node is obtained and a multicast Media Access Control (MAC) address associated with the MEP node's OAM domain level is determined. Thereafter, the unknown DA in the unicast OAM frame is replaced with the multicast MAC address, whereby the OAM frame is forwarded to a set of outgoing port addresses associated only with the multicast MAC address of the particular OAM domain.

In another aspect, the present invention is directed to a network entity operable in an Ethernet OAM network. A first database structure is included for storing information relating to destination address (DA) information and port address information associated therewith. A second database structure is included for storing information relating to source address (SA) information and MEP level information associated therewith, wherein the MEP level information further corresponds to multicast MAC address information. A logic structure is provided for replacing a DA in a unicast OAM frame arriving at the network entity with a multicast MAC address, if the DA is absent in the first database structure, wherein the logic structure is operable to query the second database structure for determining the multicast MAC address based upon the unicast OAM frame's SA and associated MEP level information.

### BRIEF DESCRIPTION OF THE DRAWINGS

The accompanying drawings are incorporated into and form a part of the specification to illustrate one or more presently preferred exemplary embodiments of the present invention. Various advantages and features of the invention will be understood from the following Detailed Description taken in connection with the appended claims and with reference to the attached drawing figures in which:

FIG. 1 depicts an embodiment of an end-to-end Ethernet OAM network having a plurality of OAM domains;

FIG. 2 depicts an exemplary hierarchical OAM layering scheme operable with respect to an end-to-end Ethernet network;

FIG. 3 depicts an exemplary embodiment of an OAM domain bounded by a pair of MEP nodes;

FIG. 4 depicts an exemplary OAM frame format;

FIG. 5 depicts an exemplary VLAN wherein frame leakage may be reduced in accordance with an embodiment of the present invention;

FIG. 6 depicts a system embodiment of a bridge entity operable to reduce frame leakage according to the teachings of the present invention; and

FIG. 7 is a flow chart of a frame leakage reduction method operable in an Ethernet OAM network according to one embodiment of the present invention.

### DETAILED DESCRIPTION OF THE DRAWINGS

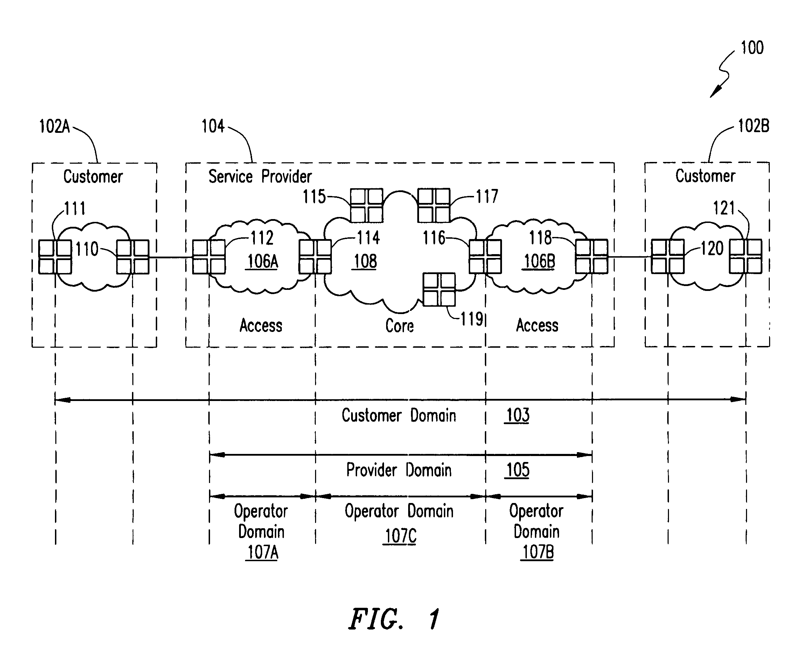

Embodiments of the invention will now be described with reference to various examples of how the invention can best be made and used. Like reference numerals are used throughout the description and several views of the drawings to indicate like or corresponding parts, wherein the various elements are not necessarily drawn to scale. Referring now to the drawings, and more particularly to FIG. 1, depicted therein is an embodiment of an end-to-end Ethernet OAM network 100 having a plurality of OAM domains wherein a scheme for reducing OAM frame leakage may be provided in accordance with an aspect of the present invention. As illustrated, the Ethernet OAM network 100 is comprised of a hierarchically layered network environment including a first customer premises network 102A and a second customer premises network 102B that form the terminal portions thereof, which in turn are connected by means of respective access networks 106A and 106B to a core transport network 108. Whereas a single service provider may administer the provisioning of end-to-end service between the two customers, one or more operators may in fact be involved in providing and maintaining the underlying network infrastructure. Accordingly, the access and core networks may comprise various diverse network and transport technologies and protocols for effectuating an end-to-end carrier-grade Ethernet service between the terminal customer networks 102A and 102B. For example, these assorted technologies may include Ethernet over SONET/SDH, Ethernet over ATM, Ethernet over Resilient Packet Ring (RPR), Ethernet over Multiprotocol Label Switching (MPLS), Ethernet over Internet Protocol (IP), etcetera.

The various network portions of the Ethernet OAM network 100 and their constituent segments are interconnected using appropriate forwarding entities such as bridges and switches. By way of illustration, entities 110, 111 and 120, 121 are exemplary of customer equipment disposed in the respective customer networks 102A and 102B. Likewise, entities 112 and 118 of access networks 106A and 106B are operable to interface with the respective customer equipment 110 and 120. Interfacing between the access networks 106A, 106B and the core network 108 is effectuated by means of entities 114 and 116, respectively. In addition to the interfacing entities, a particular network may include a number of additional entities within that network. For example, entities 115, 117 and 119 are exemplary equipment within the core network 100, wherein point-to-multipoint operations may be effectuated.

As alluded to in the Background section of the present patent application, the Ethernet OAM architecture of a hierarchically layered end-to-end carrier-grade Ethernet service network such as the Ethernet network 100 is logically segmented into a number of OAM domains having a designated hierarchy of domain levels. With respect to the Ethernet OAM network 100 of FIG. 1, a customer domain 103, a provider domain 105 and one or more operator domains 107A-107C are exemplified, each of which is bounded by multiple MEP nodes and includes one or more MIP nodes disposed therebetween. Whereas MEP nodes are operable to initiate various OAM commands and associated frames, e.g., Continuity Check (CC), TraceRoute, Ping, etcetera, MIP nodes passively receive and respond to the incoming OAM frames based on domain-level compatibility.

It should be appreciated by those skilled in the art that by virtue of MEP and MIP provisioning, a static partitioning of the Ethernet OAM network is effectuated whereby MEP nodes demarcate the boundaries of non-intersecting Ethernet domains such that OAM frame leakage from one domain to another is curtailed. That is, OAM frames intended for one domain are required to stay within that domain for processing while all other OAM frames are filtered out. Further, MEP and MIP nodes are provisionable within an Ethernet OAM network such that it is possible to define a number of easily manageable Maintenance Entity (ME) domains depending on business and service models and deployment scenarios. Due to the hierarchical arrangement of the OAM domains, customer-level domains are disposed at a higher hierarchical level than the service provider domains, which in turn are disposed at a higher level than operator-level domains. Accordingly, in terms of visibility and awareness, operator-level domains have higher OAM visibility than service provider-level domains, which in turn have higher visibility than customer-level domains. Thus, whereas an operator OAM domain has knowledge of both service provider and customer domains, the converse is not true. Likewise, a service provider domain has knowledge of customer domains but not vice versa.

As set forth in the IEEE 802.1ag specification documentation referenced hereinabove, various rules govern the treatment of Ethernet packets/frames as they move from one domain level to another. MEP nodes are operable to issue OAM frames to all other MEP nodes across the level/OAM domains, while an MIP node can interact only with the MEP nodes of its domain. Each MIP node at a higher domain level is also operable as a MEP node for the next hierarchical layer below. Thus a single piece of forwarding entity equipment (e.g., a bridge) may have both MIP and MEP nodes thereat that are of different levels. Because of the boundedness of OAM flows, frames at a given level i, i = 1, 2, ..., N, remain at that level. As set forth in the related patent application cross-referenced hereinabove, the levels of OAM frames are encoded therein depending on the domain levels assigned to the MEP nodes originating the OAM frames. Further, OAM frames are either processed or discarded by the same level MIP/MEP nodes subject to the following conditions: (i) an OAM frame is discarded when originated from outside the instant OAM domain, and (ii) an OAM frame is processed when originated within the instant CAM domain. Due to the hierarchical nature of OAM visibility, frames from lower maintenance domain levels (e.g., operator) are relayed transparently by MEP/MIP nodes disposed at higher domain levels (e.g., customer). On the other hand, higher domain OAM frames (e.g, originated by customer-level MEP nodes) are always processed by lower level MEP/MIP nodes (e.g., operator-level nodes).

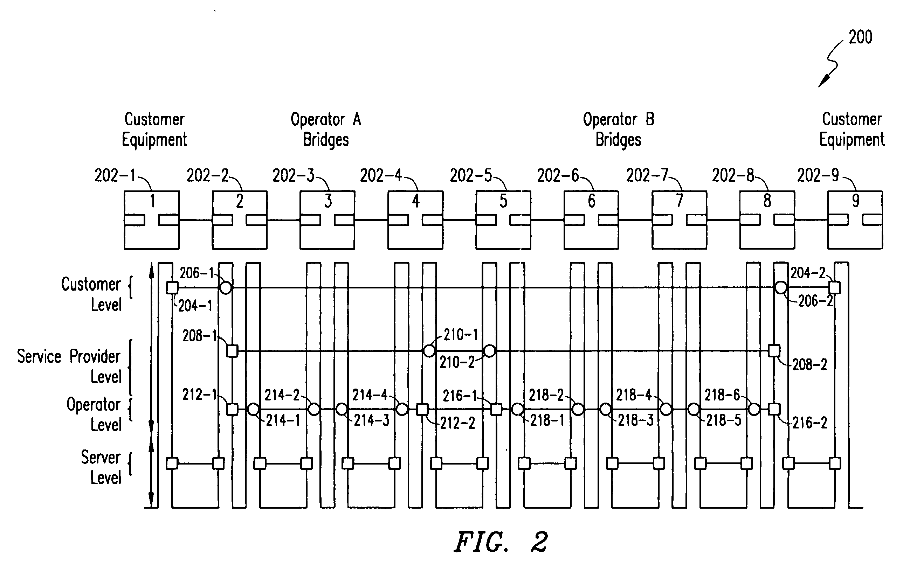

FIG. 2 depicts an exemplary hierarchical OAM layering scheme 200 operable with respect to an end-to-end Ethernet network such as e.g., network 100 shown in FIG. 1, wherein a plurality of Ethernet bridges are illustrative of forwarding entities having MIP/MEP nodes at different domain levels. Reference numerals 202-1 and 202-9 refer to customer bridge equipment disposed at the two ends of the network. Two operator networks, Operator-A and Operator-B, are deployed between the customer equipment 202-1 and 202-9, wherein Operator-A network comprises bridges 202-2 through 202-4 and Operator-B network comprises bridges 202-5 through 202-9. At customer level, the OAM domain is bounded by MEP nodes 204-1 and 204-2 effectuated at customer bridge equipment 202-1 and 202-9, respectively, which includes two MIP nodes 206-1 and 206-2 that are effectuated at Operator-A bridge 202-2 and Operator-B bridge 202-8, respectively. Beneath the customer-level MIP nodes 206-1 and 206-2 are disposed two MEP nodes 208-1 and 208-2, also effectuated at Operator-A bridge 202-2 and Operator-B bridge 202-8, respectively, that bound the service provider-level OAM domain. Within this domain, a MIP node 210-1 effectuated at Operator-A bridge 202-4 is interfaced with another MIP node 210-2 effectuated at Operator-B bridge 202-5. Two operator-level domains are defined that correspond to the two operator networks, wherein operator-level MEP nodes 212-1 (effectuated at Operator-A bridge 202-2) and 212-2 (effectuated at Operator-A bridge 202-4) bound one operator domain and operator-level MEF nodes 216-1 (effectuated at Operator-B bridge 202-5) and 216-2 (effectuated at Operator-B bridge 202-8) bound the other operator domain. Further, MIP nodes 214-1 through 214-4 are disposed in the operator-level domain defined by the MEP nodes 212-1 and 212-2, wherein bridge 202-2 effectuates MIP node 214-1, bridge 202-3 effectuates MIP nodes 214-2 and 214-3, and bridge 202-4 effectuates MIP node 214-4. Likewise, MIP nodes 218-1 through 218-6 are disposed in the operator-level domain defined by the MEP nodes 216-1 and 216-2, wherein bridge 202-5 effectuates MIP node 218-1, bridge 202-6 effectuates MIP nodes 218-2 and 218-3, bridge 202-7 effectuates MIP nodes 218-4 and 218-5 and, finally, bridge 202-8 effectuates MIP node 218-6.

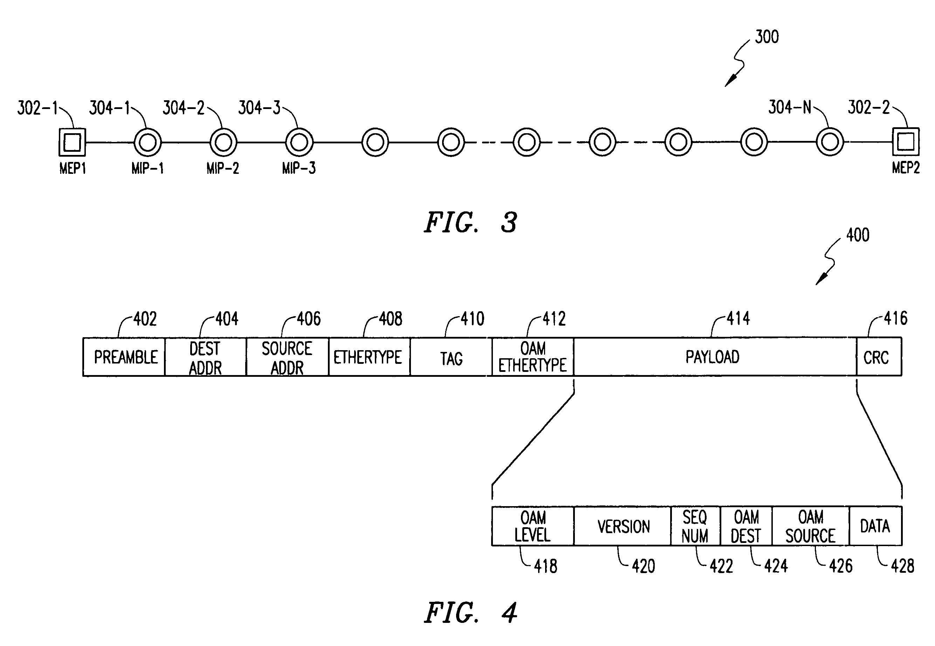

Based on the foregoing discussion, it should be apparent that a single network entity may be operable to effectuate one or more MIP/MEP nodes at different levels depending on its deployment and OAM service provisioning. By way of illustration, it can be seen that bridge entity 202-2 effectuates the processing and logic of customer-level MIP node 206-1, service provider-level MEP 208-1, operator-level MEP 212-1 as well as operator-level MIP 214-2. Accordingly, the physical equipment of an Ethernet network represents a flat, "vertically-compressed" layer that is logically expandable into a number of hierarchical levels where, at any one level, an OAM domain may be abstracted as a concatenation of a plurality of MIP nodes bounded by multiple MEP nodes. In essence, FIG. 3 depicts such an exemplary embodiment of an OAM domain 300 including MIP nodes 304-1 through 304-N that are bounded by a pair of MEP nodes 302-1 and 302-2, which represents a particular case of point-to-point operation. It will be realized that in the point-to-multipoint case, more than two MEPs are provided to bound the OAM network (as seen, e.g., in the core network portion 108 of FIG. 1).

As alluded to hereinabove, MEP nodes are operable to originate various OAM frames which may be used for effectuating such OAM service functions as discovery, connectivity verification, latency/loss measurements, delay variation measurements, etcetera, within an end-to-end Ethernet network. In general, the OAM frames are issued on a per-Ethernet Virtual Connection (per-EVC) basis and look like user data frames, but differentiated by using (i) certain predetermined multicast addresses for OAM discovery and (ii) certain predetermined EtherTypes for OAM. Also, because Ethernet as a connectionless transport technology has the property that packets may be sent to different entities within the network that need not or should not receive them (e.g., when the MAC address is not known), domain-based OAM barriers or filters are also encoded therein.

FIG. 4 depicts an exemplary OAM frame 400. A number of fields such as preamble 402, destination (DA) and source (SA) MAC addresses 404 and 406, Virtual LAN (VLAN) EtherType 408, VLAN tag 410, OAM EtherType 412 and a cyclic redundancy check (CRC) field 416 are provided along with a data payload 414 of a plurality of bytes. The destination MAC address 404 can include a multicast MAC address (e.g., for TraceRoute and Connectivity Check) or a unicast address (for Maintenance Intermediate Points). Within the data payload 414, a number of sub-fields are provided for effectuating OAM functionality. An OAM level field 418 encodes the absolute level of the originating MEP's domain. A version field 420 is operable to specify the particular version of the OAM protocol being used. A sequence number field 422 is useful for detecting if an OAM frame is out of order in a message unit. Also provided are OAM destination and OAM source fields 424 and 426, wherein the destination address field 426 encodes the address of the MEP or MIP being tested and the source address field 426 encodes the address of the MEP or MIF sending the OAM frame. A data field 428 which may include padding (thereby allowing OAM frames to have variable sizes) is operable to specify the OAM operation being performed (e.g., Ping, CC, TraceRoute, Loop Detection, Error messaging, etc.). Additional fields may also be provided in the OAM frame 400 or in any region thereof depending on specific implementation and applicable standards.

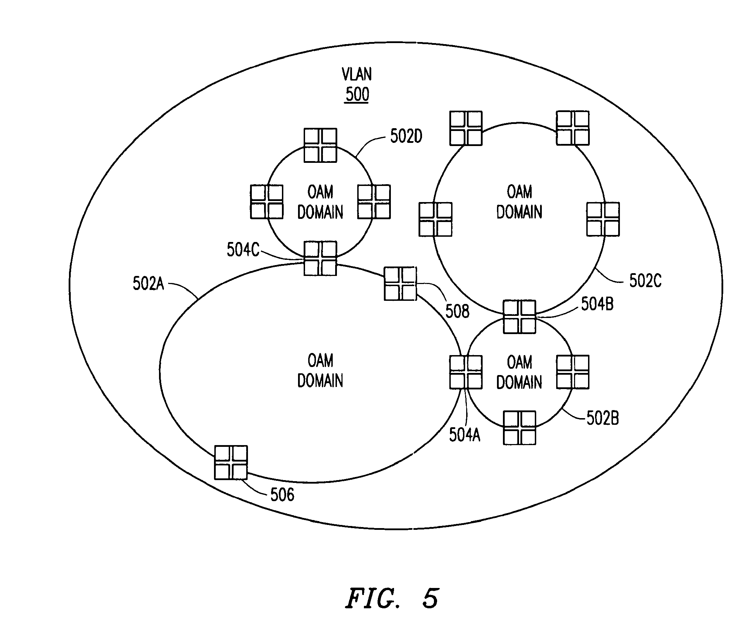

FIG. 5 depicts a simplified exemplary VLAN 500 wherein frame leakage may be reduced in accordance with an embodiment of the present invention. Four OAM domains 502A-502D are illustratively disposed within the VLAN domain 500, each having a plurality of bridge entities that effectuate the MEP and MIP nodes relating thereto. As shown, the OAM domains share one or more bridge equipment entities disposed in the VLAN 500. For instance, bridge 504A is operable to effectuate the flow points of both OAM domain 502A as well as OAM domain 502B, but on different ports or interfaces as required by the strictures of OAM domain separation. Likewise, bridge 504B and bridge 504C are shared between OAM domains 502B and 502C and between OAM domains 502D and 502A, respectively.

By way of illustration, OAM domain 502A also includes bridge entities 506 (operable to effectuate a MEP source node of the domain) as well as 508 (operable to effectuate a MIP node of the domain). When the MEP source node bridge 506 issues a Ping directed to the MIP bridge entity 508 via bridge 504A, for example, depending on whether bridge 504A has a port address entry in its forwarding/filtering database corresponding to the DA encoded in the incoming Ping frame, bridge 504A may broadcast the Ping to other domains, e.g., domain 502B, of the VLAN 500 as well.

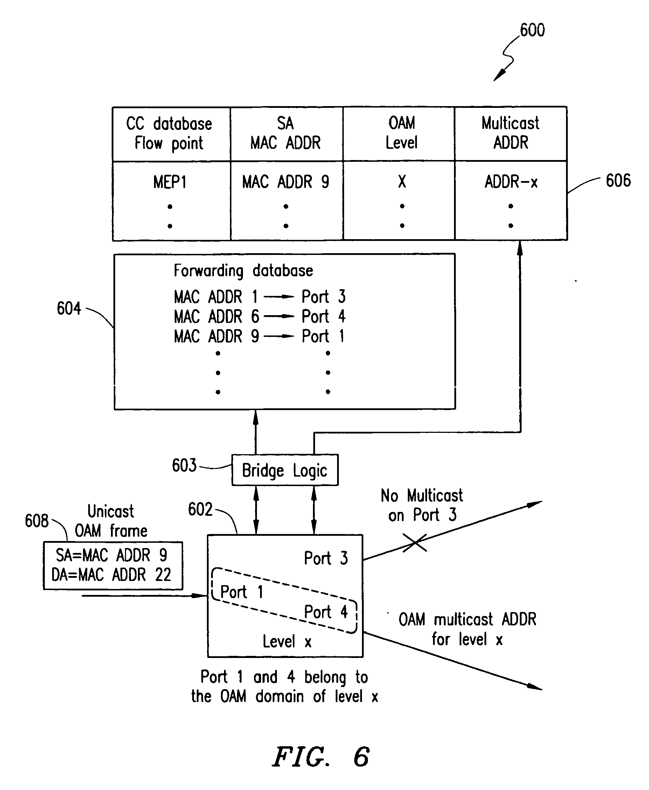

FIG. 6 depicts a system embodiment of a MIP bridge entity 600 operable to reduce frame leakage in a VLAN domain, e.g., VLAN 500 described above, in accordance with the teachings of the present invention. As illustrated, bridge entity 600 is provided with bridge logic 603 and associated port hardware 602 comprising three ports, Port 1, Port 3 and Port 4, wherein Port 1 and Port 4 belong a particular OAM domain whereas Port 4 belongs to another OAM domain. Associated with bridge entity 600 is a first database structure 604 operable as a forwarding/filtering database to store DA information and associated port address information. A second database structure 606 (e.g., a Continuity Check or CC database) is operable to store associations between SA information of incoming OAM frames and corresponding MEP source nodes. Additionally, OAM domain levels (level information) that correspond to the MEP source nodes is also provided in the second database 606, which may be built during normal Ethernet OAM operations (e.g, discovery).

Upon receiving a unicast OAM frame 608 having a destination address (DA) and a source address (SA) at MIP bridge entity 600 (in particular, at Port 1), a logic structure (e.g., which may be provided as part of bridge logic 603) is operable for querying the first database 604 associated therewith to determine if the DA (e.g., DA = MAC Address (ADDR) 22) is provided in the first database with an outgoing port address. Since the first database 604 does not have a port entry for DA = MAC ADDR 22, a further logic mechanism (which may also be provided as part of bridge logic 603) is operable for querying the second database 606 to verify if the SA of the incoming OAM frame 608 corresponds to a MEP node that is provided in the second database. If so, corresponding OAM domain level information of the MEP node is obtained and a multicast MAC address associated with the MEP node's OAM domain level is determined. As illustrated, SA = MAC ADDR 9 is provided in the second database 606, which is associated with MEP1 having an OAM level of [x] that corresponds to a domain-specific multicast MAC address. Additional bridge logic is provided for replacing the DA in the unicast OAM frame 608 with the multicast MAC address, e.g., ADDR-x, which is mapped to a set of port numbers of the bridge entity 602 that are restricted to the particular domain level. Accordingly, the incoming unicast OAM frame 608 is forwarded only to the outgoing port addresses or numbers confined to the domain (of level x), thereby eliminating the eventuality of message broadcast into the VLAN via frame leakage to other OAM domains thereof.

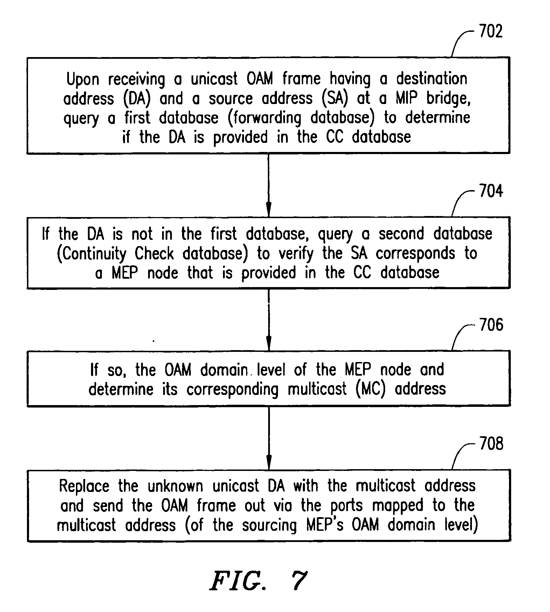

The various operations illustrated above are generalized as a flow chart in FIG. 7 which depicts a frame leakage reduction method operable in an Ethernet OAM network according to one embodiment of the present invention. At block 702, upon receiving at a MIP bridge a unicast OAM frame (e.g., Ping) having a DA and a SA, a first database is queried to determine if the DA is provided therein. If the DA is not in the first database, a second database is queried to verify if the SA corresponds to a MEP node that is provided therein (block 704). If so, the domain level of the MEP node is obtained and the corresponding multicast address is determined (block 706). Thereafter, the unknown unicast DA in the incoming OAM frame is replaced with the multicast address and the frame is sent out via the ports mapped to the multicast address (block 708). It will be apparent to those skilled in the art upon reference hereto that these operations and associated logic may be embodied by way of software, firmware, or hardware, or in combination thereof. Further, such logic structure and functionality may be partitioned, modularized or integrated in a number of ways as part of the MIP bridge logic (e.g., bridge logic 603 of FIG. 6).

Based on the foregoing Detailed Description, it should be appreciated that the present invention advantageously provides a frame leakage reduction mechanism for MIP entities in an Ethernet VLAN domain wherein unintended broadcasting of unicast OAM messages is curtailed, thereby eliminating the possibility of security violations due to leakage of frames from one OAM domain to another.
The following entity as well as the following features, separately or in any combination, may also constitute advantageous embodiments of the described or claimed invention:
- The claimed and/or described method of reducing frame leakage in a VLAN defined in an Ethernet OAM network, wherein said particular OAM domain comprises an operator-level OAM domain;
- The claimed and/or described system for reducing frame leakage in a VLAN defined in an Ethernet OAM network, wherein said particular OAM domain comprises a customer-level OAM domain;
- The claimed and/or described system for reducing frame leakage in a VLAN defined in an Ethernet OAM network, wherein said particular OAM domain comprises a service provider-level OAM domain;
- The claimed and/or described system for reducing frame leakage in a VLAN defined in an Ethernet OAM network, wherein said particular OAM domain comprises an operator-level OAM domain;
- A network entity operable in an Ethernet Operations, Administration and Maintenance (OAM) network, comprising: a first database structure for storing information relating to destination address (DA) information and port address information associated therewith; a second database structure for storing information relating to source address (SA) information and Maintenance End Point (MEP) domain level information associated therewith, said MEP domain level information further corresponding to multicast Media Access Control (MAC) address information; and a logic structure for replacing a destination address (DA) in a unicast OAM frame arriving at said network entity with a multicast MAC address, if said DA is absent in said first database structure, wherein said logic structure is operable to query said second database structure for determining said multicast MAC address based upon said unicast OAM frame's SA and associated MEP domain level information;
- The claimed and/or described network entity operable in an Ethernet OAM network, wherein said unicast OAM frame comprises a Ping frame directed to a particular Maintenance Intermediate Point (MIP) bridge that is disposed in an OAM domain of said Ethernet OAM network;
- The claimed and/or described network entity operable in an Ethernet OAM network, wherein said OAM domain comprises a customer-level OAM domain;
- The claimed and/or described network entity operable in an Ethernet OAM network, wherein said OAM domain comprises a service provider-level OAM domain;
- The claimed and/or described network entity operable in an Ethernet OAM network, wherein said OAM domain comprises an operator-level OAM domain;
- The claimed and/or described network entity operable in an Ethernet OAM network, wherein said OAM domain forms part of a Virtual Local Area Network (VLAN) defined in said Ethernet OAM network;
- The claimed and/or described network entity operable in an Ethernet OAM network, wherein said first database structure comprises a forwarding database;
- The claimed and/or described network entity operable in an Ethernet OAM network, wherein said second database structure comprises a Continuity Check (CC) database.

Although the invention has been described with reference to certain exemplary embodiments, it is to be understood that the forms of the invention shown and described are to be treated as exemplary embodiments only. Accordingly, various changes, substitutions and modifications can be realized.

## Claims

1. A method of reducing frame leakage in a Virtual Local Area Network "VLAN" defined in an Ethernet Operations, Administration and Maintenance "OAM" network (100), wherein
upon receiving a unicast OAM frame (608) having a destination address "DA" and a source address "SA" at a Maintenance Intermediate Point "MIP" bridge entity (600) disposed in a particular OAM domain of said VLAN (500), querying a first database (604) associated with said MIP bridge entity (600) to determine if said DA is provided in said first database (604) with an outgoing port address,
**characterized in that** the method further comprises:
if said DA is not in said first database (604), querying a second database (604) to verify if said SA corresponds to a Maintenance End Point "MEP" node that is provided in said second database (604);
if said SA corresponds to a Maintenance End Point "MEP" node that is provided in said second database (604), obtaining OAM domain level information of said MEP node, determining a multicast Media Access Control "MAC" address associated with said MEP node's OAM domain level, replacing said DA in said unicast OAM frame (608) with said multicast MAC address, and forwarding said OAM frame (608) to a set of outgoing port addresses associated with said multicast MAC address.

2. The method of reducing frame leakage in a VLAN (500) defined in an Ethernet OAM network (100) as recited in claim 1, wherein said unicast OAM frame (608) comprises a Ping frame directed to a particular MIP node (206-1, 206-2, 210-1, 210-2, 214-1 - 214-4, 218-1 - 218-6; 304-1 - 304N; 508).

3. The method of reducing frame leakage in a VLAN (500) defined in an Ethernet OAM network (100) as recited in claim 1, wherein said first database (604) comprises a forwarding database.

4. The method of reducing frame leakage in a VLAN (500) defined in an Ethernet OAM network (100) as recited in claim 3, wherein said second database (604) comprises a Continuity Check "CC" database.

5. The method of reducing frame leakage in a VLAN (500) defined in an Ethernet OAM network (100) as recited in claim 1, wherein said particular OAM domain comprises a customer-level OAM domain.

6. The method of reducing frame leakage in a VLAN (500) defined in an Ethernet OAM network (100) as recited in claim 1, wherein said particular OAM domain comprises a service provider-level OAM domain.

7. A system for reducing frame leakage in a Virtual Local Area Network "VLAN" defined in an Ethernet Operations, Administration and Maintenance "OAM" network (100), said VLAN (500) including more than one OAM domain, comprising:
means, operable upon receiving a unicast OAM frame (608) having a destination address "DA" and a source address "SA" at a Maintenance Intermediate Point "MIP" bridge entity (600) disposed in a particular OAM domain, for querying a first database (604) associated with said MIP bridge entity (600) to determine if said DA is provided in said first database (604) with an outgoing port address,
**characterized in that** the system further comprises:
means for querying a second database (604) if said DA is not provided in said first database (604), to verify if said SA corresponds to a Maintenance End Point "MEP" node that is provided in said second database (604);
means, operable upon verifying that said SA corresponds to a MEP node in said second database (604), for
- obtaining OAM domain level information of said MEP node;
- determining a multicast Media Access Control "MAC" address associated with said MEP node's OAM domain level;
- replacing said DA in said unicast OAM frame (608) with said multicast MAC address; and
- forwarding said OAM frame (608) to a set of outgoing port addresses associated with said multicast MAC address.

8. The system for reducing frame leakage in a VLAN (500) defined in an Ethernet OAM network (100) as recited in claim 7, wherein said unicast OAM frame (608) comprises a Ping frame directed to a particular MIP node (206-1, 206-2, 210-1, 210-2, 214-1 - 214-4, 218-1 - 218-6; 304-1 - 304N; 508).

9. The system for reducing frame leakage in a VLAN (500) defined in an Ethernet OAM network (100) as recited in claim 7, wherein said first database (604) comprises a forwarding database.

10. The system for reducing frame leakage in a VLAN (500) defined in an Ethernet OAM network (100) as recited in claim 9, wherein said second database (604) comprises a Continuity Check "CC" database.

## Patentansprüche

1. Ein Verfahren zur Reduktion von Rahmenlecks in einem in einem Ethernet-Betriebs-, Verwaltungs- und Wartungs-, "OAM"-Netzwerk (100) definierten Virtuellen Lokalen Netzwerk "VLAN", wobei
bei Empfang eines Unicast-OAM-Rahmens (608) mit einer Zieladresse "DA" und einer Quelladresse "SA" an einer Maintenance Intermediate Point-"MIP"-Brückeninstanz (600), welche in einer bestimmten OAM-Domäne des besagten VLANs (500) angeordnet ist, Abfragen einer ersten Datenbank (604), welche der besagten MIP-Brückeninstanz (600) zugeordnet ist, um zu ermitteln, ob die besagte DA in der besagten ersten Datenbank (604) mit einer Ausgangsport-Adresse versehen ist,
**dadurch gekennzeichnet, dass** das Verfahren weiterhin umfasst:
Wenn die besagte DA nicht in der besagten ersten Datenbank (604) vorhanden ist, Abfragen einer zweiten Datenbank (604), um zu überprüfen, ob die besagte SA einem Maintenance End Point-"MEP"-Knoten, welcher in der besagten zweiten Datenbank (604) vorhanden ist, entspricht;
wenn die besagte SA einem in der besagten zweiten Datenbank (604) vorhandenen Maintenance End Point-"MEP"-Knoten entspricht, Einholen von OAM-Domänen-Ebene-Informationen des besagten MEP-Knotens, Ermitteln einer der besagten OAM-Domänen-Ebene des MEP-Knotens zugeordneten Multicast-Medienzugriffskontroll-"MAC"-Adresse, Ersetzen der besagten DA in dem besagten Unicast-OAM-Rahmen (608) durch die besagte Multicast-MAC-Adresse, und Weiterleiten des besagten OAM-Rahmens (608) an einen Satz von der besagten Multicast-MAC-Adresse zugeordneten Ausgangsport-Adressen.

2. Das Verfahren zur Reduktion von Rahmenlecks in einem in einem Ethernet-OAM-Netzwerk (100) definierten VLAN (500) nach Anspruch 1, wobei der besagte Unicast-OAM-Rahmen (608) einen Ping-Rahmen, welcher an einen bestimmten MIP-Knoten (206-1, 206-2, 210-1, 210-2, 214-1 - 214-4, 218-1 - 218,6; 304-1 - 304N; 508) gerichtet ist, umfasst.

3. Das Verfahren zur Reduktion von Rahmenlecks in einem in einem Ethernet-OAM-Netzwerk (100) definierten VLAN (500) nach Anspruch 1, wobei die besagte erste Datenbank (604) eine Weiterleitungsdatenbank umfasst.

4. Das Verfahren zur Reduktion von Rahmenlecks in einem in einem Ethernet-OAM-Netzwerk (100) definierten VLAN (500) nach Anspruch 3, wobei die besagte zweite Datenbank (604) eine Durchgangsprüfungs-"CC"-Datenbank umfasst.

5. Das Verfahren zur Reduktion von Rahmenlecks in einem in einem Ethernet-OAM-Netzwerk (100) definierten VLAN (500) nach Anspruch 1, wobei die besagte bestimmte OAM-Domäne eine OAM-Domäne der Kunden-Ebene umfasst.

6. Das Verfahren zur Reduktion von Rahmenlecks in einem in einem Ethernet-OAM-Netzwerk (100) definierten VLAN (500) nach Anspruch 1, wobei die besagte bestimmte OAM-Domäne eine OAM-Domäne der Dienstanbieter-Ebene umfasst.

7. Ein System zur Reduktion von Rahmenlecks in einem in einem Ethernet-Betriebs-, Verwaltungs- und Wartungs- "OAM"-Netzwerk (100) definierten Virtuellen Lokalen Netzwerk "VLAN", wobei das besagte VLAN (500) mehr als eine OAM-Domäne einschließt, umfassend:
Mittel, welche nach Empfang eines Unicast-OAM-Rahmens (608) mit einer Zieladresse "DA" und einer Quelladresse "SA" an einer Maintenance Intermediate Point-"MIP"-Brückeninstanz (600), welche in einer bestimmten OAM-Domäne angeordnet ist, eine erste Datenbank (604), welche der besagten MIP-Brückeneinheit (600) zugeordnet ist, abfragt, um zu ermitteln, ob die besagte DA in der besagten ersten Datenbank (604) mit einer Ausgangsport-Adresse versehen ist,
**dadurch gekennzeichnet, dass** das System weiterhin umfasst:
Mittel zum Abfragen einer zweiten Datenbank (604), wenn die besagte DA nicht in der besagten ersten Datenbank (604) vorhanden ist, um zu überprüfen, ob die besagte SA einem Maintenance End Point-"MEP"-Knoten, welcher in der besagten zweiten Datenbank (604) vorhanden ist, entspricht;
Mittel, welche nach dem Überprüfen, dass die besagte SA einem MEP-Knoten in der besagten zweiten Datenbasis (606) entspricht, die folgenden Schritte ausführen:
- Einholen von OAM-Domänen-Ebene-Informationen des besagten MEP-Knotens;
- Ermitteln einer der besagten OAM-Domänen-Ebene des MEP-Knotens zugeordneten Multicast-Medienzugriffskontroll-"MAC"-Adresse;
- Ersetzen der besagten DA in dem besagten Unicast-OAM-Rahmen (608) durch die besagte Multicast-MAC-Adresse; und
- Weiterleiten des besagten OAM-Rahmens (608) an einen Satz von der besagten Multicast-MAC-Adresse zugeordneten Ausgangsport-Adressen.

8. Das System zur Reduktion von Rahmenlecks in einem in einem Ethernet-Betriebs-, Verwaltungs- und Wartungs- "OAM"-Netzwerk (100) definierten Virtuellen Lokalen Netzwerk "VLAN" (500) nach Anspruch 7, wobei der besagte Unicast-OAM-Rahmen (608) einen Ping-Rahmen, welcher an einen bestimmten MIP-Knoten (206-1, 206-2, 210-1, 210-2, 214-1 - 214-4, 218-1 - 218,6; 304-1 - 304N; 508) gerichtet ist, umfasst.

9. Das System zur Reduktion von Rahmenlecks in einem in einem Ethernet-OAM-Netzwerk (100) definierten VLAN (500) nach Anspruch 7, wobei die besagte erste Datenbank (604) eine Weiterleitungsdatenbank umfasst.

10. Das System zur Reduktion von Rahmenlecks in einem in einem Ethernet-OAM-Netzwerk (100) definierten VLAN (500) nach Anspruch 9, wobei die besagte zweite Datenbank (604) eine Durchgangsprüfungs-"CC"-Datenbank umfasst.

## Revendications

1. Procédé pour réduire la fuite de trames dans un réseau local virtuel « VLAN » défini dans un réseau Ethernet d'exploitation, d'administration et de maintenance « OAM » (100), dans lequel
sur réception d'une trame OAM à monodiffusion (608) ayant une adresse destinataire « DA » et une adresse source « SA » à une entité de pont (600) point intermédiaire de maintenance « MIP » disposée dans un domaine OAM particulier dudit VLAN (500), interrogation d'une première base de données (604) associée à ladite entité de pont MIP (600) pour déterminer si ladite DA dans ladite première base de données (604) est munie d'une adresse de port sortant,
**caractérisé en ce que** le procédé comprend en outre :
si ladite DA ne se trouve pas dans ladite première base de données (604), interrogation d'une deuxième base de données (604) pour vérifier si ladite SA correspond à un noeud point final de maintenance « MEP » qui se trouve dans ladite deuxième base de données (604) ;
si ladite SA correspond à un noeud point final de maintenance « MEP » qui se trouve dans ladite deuxième base de données (604), obtention de l'information du niveau de domaine OAM dudit noeud MEP, détermination d'une adresse de contrôle d'accès au support « MAC » de multidiffusion associée audit niveau de domaine OAM du noeud MEP, remplacement de ladite DA dans ladite trame OAM (608) par ladite adresse MAC de multidiffusion et transfert de ladite trame OAM (608) à un ensemble d'adresses de port sortant associées à ladite adresse MAC de multidiffusion.

2. Procédé pour réduire la fuite de trames dans un VLAN (500) défini dans un réseau OAM Ethernet (100) selon la revendication 1, dans lequel ladite trame OAM à monodiffusion (608) comprend une trame Ping adressée à un noeud MIP particulier (206-1, 206-2, 210-1, 210-2, 214-1, 214-4, 218-1 218-6; 304-1 -304N ; 508).

3. Procédé pour réduire la fuite de trames dans un VLAN (500) défini dans un réseau OAM Ethernet (100) selon la revendication 1, dans lequel ladite première base de données (604) comprend une base de données de transfert.

4. Procédé pour réduire la fuite de trames dans un VLAN (500) défini dans un réseau OAM Ethernet (100) selon la revendication 3, dans lequel ladite deuxième base de données (604) comprend une base de données de contrôle de la continuité «CC».

5. Procédé pour réduire la fuite de trames dans un VLAN (500) défini dans un réseau OAM Ethernet (100) selon la revendication 1, dans lequel ledit domaine OAM particulier comprend un domaine OAM au niveau du client.

6. Procédé pour réduire la fuite de trames dans un VLAN (500) défini dans un réseau OAM Ethernet (100) selon la revendication 1, dans lequel ledit domaine OAM particulier comprend un domaine OAM au niveau du fournisseur de service.

7. Système pour réduire la fuite de trames dans un réseau local virtuel « VLAN » défini dans un réseau Ethernet d'exploitation, d'administration et de maintenance « OAM » (100), ledit VLAN (500) comprenant plus d'un domaine OAM, comprenant :
moyens qui peuvent être utilisés, sur réception d'une trame OAM à monodiffusion (608) ayant une adresse destinataire « DA » et une adresse source « SA » à une entité de pont (600) point intermédiaire de maintenance « MIP » disposée dans un domaine OAM particulier, pour interroger une première base de données (604) associée à ladite entité de pont MIP (600) pour déterminer si ladite DA dans ladite première base de données (604) est munie d'une adresse de port sortant,
**caractérisé en ce que** le système comprend en outre :
moyens pour interroger une deuxième base de données (604) si ladite DA ne se trouve pas dans ladite première base de données (604) afin de vérifier si ladite SA correspond à un noeud point final de maintenance « MEP » qui se trouve dans ladite deuxième base de données (604) ;
moyens qui peuvent être utilisés pour vérifier que ladite SA correspond à un noeud point final de maintenance « MEP » qui se trouve dans ladite deuxième base de données (604), pour
- obtenir l'information du niveau de domaine OAM dudit noeud MEP ;
- déterminer une adresse de contrôle d'accès au support « MAC » de multidiffusion associée audit niveau de domaine OAM du noeud MEP ;
- remplacer ladite DA dans ladite trame OAM (608) par ladite adresse MAC de multidiffusion ; et
- transférer ladite trame OAM (608) à un ensemble d'adresses de port sortant associées à ladite adresse MAC de multidiffusion.

8. Système pour réduire la fuite de trames dans un VLAN (500) défini dans un réseau OAM Ethernet (100) selon la revendication 7, dans lequel ladite trame OAM à monodiffusion (608) comprend une trame Ping adressée à un noeud MIP particulier (206-1, 206-2, 210-1, 210-2, 214-1, 214-4, 218-1 -218-6 ; 304-1 -304N ; 508).

9. Système pour réduire la fuite de trames dans un VLAN (500) défini dans un réseau OAM Ethernet (100) selon la revendication 7, dans lequel ladite première base de données (604) comprend une base de données de transfert.

10. Système pour réduire la fuite de trames dans un VLAN (500) défini dans un réseau OAM Ethernet (100) selon la revendication 9, dans lequel ladite deuxième base de données (604) comprend une base de données de contrôle de la continuité « CC ».
